# FASCICULE DE BREVET EUROPEEN

(11) **EP 2 031 406 B1**
(45) Date de publication et mention de la délivrance du brevet: **18.02.2015**
(21) Numéro de dépôt: 08167351.9
(22) Date de dépôt: 18.07.2005
(51) Int. Cl.: G01N 35/02, B01L 3/00, G01N 21/03, G01N 33/49

(54) **Analyseur automatique pluridisciplinaire pour le diagnostic in vitro**
Automatischer Mehrzweck-Analysator für In-Vitro-Diagnostik
Automatic multidisciplinary analyser for in vitro diagnosis

(30) Priorité: 23.07.2004 FR 0408178
(43) Date de publication de la demande: 04.03.2009
(62) Demande divisionnaire de: 05791139.8
(73) Titulaire: ImmunoDiagnostic System France, 21320 Pouilly en Auxois (FR); Rousseau, Alain, 75004 Paris (FR)
(72) Inventeur: ROUSSEAU, Alain, 75004, PARIS (FR)
(74) Mandataire: Verriest, Philippe

(56) Documents cités:
- EP-A- 1 382 392
- WO-A-92/04978
- US-A- 3 713 985
- US-A- 4 785 407
- US-A- 5 350 564
- PATENT ABSTRACTS OF JAPAN vol. 008, no. 282 (P-323), 22 décembre 1984 (1984-12-22) -& JP 59 147267 A (OLYMPUS KOGAKU KOGYO KK), 23 août 1984 (1984-08-23)

## Description

La présente invention concerne une cuvette unitaire utilisée par un dispositif automatique d'analyse pour diagnostic in vitro.

Le diagnostic in vitro se subdivise en plusieurs disciplines qui utilisent des technologies différentes de mesure. Celles-ci consistent à quantifier un analyte, à mesure une activité enzymatique etc., dans un milieu biologique aqueux, c'est à dire, les tests qui sont effectués sur du sérum, du plasma ou d'autres milieux et dont la mesure est l'aboutissement d'un processus réactionnel qui utilise des réactifs, le milieu à doser, un ou plusieurs contenants ou consommables utilisés pour la réaction. Un instrument, un équipement, une machine peut automatiser le processus de prélèvement et de distribution des produits concernés, réaliser les mesures à la demande, effectue les calculs et les traitements de données et rend les résultats sous la forme souhaitée.
En particulier, la présente invention concerne de façon générale les technologies de mesure suivantes :
- Les tests de chimie clinique ou biochimie qui sont réalisés à partir du sérum sanguin ou d'autres milieux biologiques aqueux et dont le principe de mesure mis en oeuvre est pour l'essentiel, la spectrophotométrie
- Les dosages immunologiques réalisés selon des modalités techniques différentes :
   o RIA, IRMA qui sont des tests utilisant des radio isotopes et qui ne sont pas facilement automatisables,
   o Tests latex d'agglutination.
   o ELISA, EIA, la mesure se faisant en spectrophotométrie, fluorescence ou CLIA en luminescence.
- Les tests de la coagulation plasmatique qui relèvent eux mêmes de plusieurs technologies mais dont l'essentiel consistent à mesurer le temps de formation d'un caillot.
   Toutes ces analyses ont en commun de faire appel à :

- un tube de prélèvement : sérum, plasma, autre, dont on veut mesurer, évaluer, doser un ou plusieurs analytes,
- un ou plusieurs réactifs qui ont pour fonction de révéler les analytes recherchés
- un instrument automatique qui conduit le processus d'analyse propre à chaque analyte suivant un mode opératoire précis en quantité et dans le temps,
- des consommables solides (cuvettes, embouts, etc.) pour servir de réacteur,
- des réactifs ancillaires, pour participer aux prélèvements précis et exacts des échantillons et réactifs, pour décontaminer et rincer,
- d'une interface homme -machine qui permet de demander les transactions, les chargements, les demandes, les validations etc. qui ont pour objet la charte des résultats du dossier traité.

Le plus souvent, les instruments d'analyse automatique sont spécialisés pour la biochimie, d'autres pour l'immunologie et la coagulation.

Quelques instruments sont conçus pour rendre des mesures dans plusieurs disciplines mais sont soit d'une complexité très importante qui conduit à des coûts élevés, soit ne sont polyvalents que séquentiellement, c'est à dire qu'ils ne peuvent traiter les analyses dossier par dossier et demandent des interventions manuelles pour passer d'une technologie de mesure à l'autre.

Les laboratoires disposent donc de plusieurs instruments qui sont parfois reliés entre eux par des chaînes de convoyage de tubes échantillons.

Il reste que chaque instrument, qu'il soit dans une chaîne ou non, a son logiciel, ses consommables, son architecture matérielle propre qui impose une formation spécifique des utilisateurs et qui oblige à multiplier les investissements dans les laboratoires.

La présente invention permet de réunir en un seul dispositif toutes les techniques susdites utilisées dans le laboratoires et s'inscrit résolument dans le cadre de la réduction des dépenses de santé, dans l'exigence des laboratoire à disposer de matériels plus simples, dont le temps de formation pour le personnel est réduit. Il n'est pas rare de voir dans un laboratoire hospitalier, compte tenu de l'organisation en équipe et de la rotation du personnel, un équipement utilisé par une cinquantaine de personnes qui évidemment ne sont pas toutes formées de manière optimale sur les instruments qu'elles utilisent. Les conséquences en matière de fiabilité des systèmes, d'erreurs de manipulation qui peuvent altérer la qualité de résultats et provoquer des erreurs de diagnostic et des surcoûts de fonctionnement, sont importantes.

Les disciplines de biochimie, d'immunologie et de coagulation ont recours aux mêmes fonctions instrumentales, et à des produits similaires, elles manifestent des exigences différentes dans les processus de mesure.

Par exemple, les tests de biochimie sont courts : quelques minutes suffisent depuis le prélèvement des échantillons et réactifs jusqu'à la fin des mesures spectrophotométrique.

Les tests immunologiques d'agglutination relèvent également de ce type de processus et ils font partie très généralement des listes des tests disponibles sur les appareils de biochimie. Malheureusement leur sensibilité est limitée et ils ne couvrent qu'une part modeste des besoins en immunologie.

En revanche, les tests d'immunologie réalisés avec d'autres méthodes sont comparativement longs. De plus la mesure spectrophotométrique classique pour ces tests immunologiques de type sandwich, ne permet pas d'obtenir une sensibilité suffisante. Il faut avoir recours à la fluorescence ou de préférence à la luminescence pour obtenir les sensibilités désirées. La technologie de mesure dans ce cas n'utilise pas les moyens utilisés en biochimie.

En coagulation, la difficulté provient également de la technologie de mesure mais pour des raisons différentes. En effet, ce qui est mesuré, c'est le temps entre l'introduction d'un réactif déclenchant et l'apparition du caillot. Ce temps peut varier selon les tests de quelques secondes à plusieurs minutes. Pendant ce temps, le réacteur dans lequel se produit la chaîne de réactions enzymatiques qui aboutit à la polymérisation de la fibrine et à la formation du caillot doit être constamment sous observation pour pouvoir fournir un résultat précis au dixième de seconde près. Au lancement d'une mesure, il n'est donc pas possible de prédéterminer la fin du processus puisque c'est précisément ce que l'on veut mesurer.

On comprend mieux maintenant pourquoi il est difficile de marier ces technologies de mesure sur un même équipement et aussi les choix faits jusqu'ici :
- des analyseurs travaillant séquentiellement par discipline pour s'affranchir des problèmes de processus temporellement incompatibles,
- des machines hybrides qui résultent de la juxtaposition de plusieurs équipements spécialisés par discipline.

Différents types de mesure et/ou d'analyse ont déjà été regroupés dans un même dispositif. Le document EP 0325874 décrit un système qui autorise deux types de mesure:
- une mesure mécanique de formation du caillot,
- une mesure photométrique ou densitométrique pour la mesure de phénomènes relevant de l'hémostase mais qui ne se traduisent pas par une coagulation.

En hémostase, les paramètres sont essentiellement ceux qui se quantifient par une coagulation effective mais d'autres sont des paramètres qui relèvent de la biochimie ou de l'immunologie (latex), qui peuvent être d'ailleurs mesurés sur des analyseurs de biochimie : ATIII, plasminogèné, D dimère, etc.

Or pour satisfaire complètement un département hémostase dans un hôpital, il convenait d'offrir tous les paramètres de cette discipline sur un même équipement et donc de pouvoir conduire simplement sur ce même équipement des tests dont les processus sont de natures très différentes.

Ce problème est géré en utilisant des réacteurs appelés cuvettes unitaires qui peuvent chacune avoir un processus différent géré indépendamment.

Mais il reste que les instruments demeurent assez complexes, du fait que le transport de ces cuvettes à l'intérieur des automates est problématique (WO 99/64839) ou induit l'adjonction à la machine d'un distributeur de cuvette qui complexifie également l'équipement ou nuit à sa compacité et à sa fiabilité.

De plus, l'utilisation de cuvettes individuelles ne solutionne pas à elle seule, la gestion de processus très différents d'analyses. En effet, il ne faut pas que les processus de mesures longues (immunologie) ou qui nécessitent l'observation permanente du phénomène à mesurer (coagulation) constituent des goulots d'étranglement pour les tests à processus rapide (biochimie).

Enfin, la multiplicité des tests sur un même équipement rend aiguës les questions de contamination entre tests et entre échantillons. Les validations des équipements deviennent difficiles et problématiques. On a recours à des systèmes de lavage très gourmands en volume de liquides détergents et en fluides de décontamination. Les quantités d'effluents deviennent difficiles à gérer.

On décrira ci-après un dispositif automatique d'analyse pouvant utiliser les cuvettes selon l'invention, qui est polyvalent mais simple donc peu coûteux à fabriquer, à maintenir et dont le coût d'exploitation est sensiblement plus bas que celui des automates actuels, avec pour conséquence la réduction du nombre de machines par laboratoire contribuant ainsi à la réduction des dépenses de santé publique.

A cet effet, le dispositif comprend :
- un modèle de cuvettes unitaires de réaction aptes à servir à différents types de tests, utilisant des technologies de mesures différentes,
- un rotor d'axe vertical, associé à des moyens d'entraînement en rotation et portant une couronne horizontale dentée, délimitant des cavités ouvertes radialement vers l'extérieur, destinées à recevoir des cuvettes unitaires,
- un dispositif d'alimentation de la couronne dentée en cuvettes unitaires de réaction,
- un dispositif d'alimentation des cuvettes en échantillons de liquide biologique à analyseur,
- des postes disposés autour de la couronne, pour la réalisation de mesures et/ou d'analyses, certains de ces postes comportant des moyens de déchargement/chargement des cuvettes pour la réalisation d'une mesure et/ou d'une analyse au niveau du poste, en dehors de la couronne,
- un automate piloté par un logiciel embarqué gérant les séquences du processus souhaité pour chaque cuvette.

Avantageusement, le dispositif comprend des moyens de maintien de la température des cuvettes à un niveau déterminé.

Avantageusement, les moyens de maintien de la température des cuvettes sont constitués par une pièce torique fixe en forme de U ouvert vers le haut, délimitant entre la couronne dentée et le tore un espace régulé en température grâce à la thermostatisation du tore réalisée par des moyens connus. En outre, le tore comporte une ouverture radiale dans sa branche extérieure en regard de chaque poste où il est procédé à l'introduction ou au retrait d'une cuvette.

La température à laquelle est maintenue la pièce de guidage torique est avantageusement de 37°C.

Il ressort des caractéristiques qui précèdent que les cuvettes peuvent être très simplement dégagées de la pièce torique, au niveau d'un poste, pour subir une opération d'analyse de leur contenu au niveau de ce poste. La cuvette peut rester le temps souhaité pour ladite analyse, sans bloquer le mouvement de la couronne d'entraînement qui assure simultanément le transfert ou le maintien en position d'autres cuvettes à d'autres postes de mesure et d'analyse. Ainsi, les analyses nécessitant un temps relativement important peuvent être effectuées en temps masqué, à un poste précis, alors que d'autres analyses instantanées sont effectuées à d'autres postes.

Cela est rendu possible, dans ce dispositif, dans la mesure où la pièce torique comporte des ouvertures radiales dans sa branche extérieure, ces ouvertures étant mises en coïncidence avec les ouvertures, des cavités de la couronne d'entraînement, permettant un transfert des cuvettes par une faible translation entre la cavité de la couronne et un poste d'analyse.

Les moyens de chargement/déchargement des cuvettes sont constitués par un actionneur linéaire comprenant un moteur électrique pas à pas disposant d'un vis-à-vis formant vérin, des capteurs optiques étant prévus pour déterminer la position de l'actionneur.

Suivant une possibilité, l'actionneur comporte, à l'extrémité de l'axe, une palette formant poussoir.

Suivant une autre possibilité, l'actionneur est un actionneur à double effet et comporte, à l'extrémité de l'axe, une pièce d'actionnement en forme de U ouvert vers le haut, et normalement située sur la trajectoire de déplacement des cuvettes.

Selon le cas, l'actionneur est monté sur la pièce torique en forme de U, ou l'actionneur est monté sur le support d'un poste disposé à l'extérieur de la couronne d'entraînement des cuvettes.

Une autre caractéristique est la modularité de ce dispositif. Il comprend une combinaison de modules répartis autour de la couronne d'entraînement. Ces combinaisons sont réalisées en fonction de la spécificité l'instrument. A titre d'exemple non, limitatif : module de lecture spectrophotométrique, module de lecture par fluorescence, module de sédimentation et de lavage, module de lecture par luminescence, module comprenant au moins une station de mesure de la coagulation, module d'addition de réactifs, module d'évacuation des cuvettes.

Avantageusement, le dispositif comporte au moins une station de mesure de la coagulation comprenant une fourche optique escamotable dans laquelle est destinée à être logée une cuvette, comportant sur une branche de la fourche au moins une diode électroluminescente, et sur l'autre branche de la fourche au moins une photodiode de détection.

Selon un mode de réalisation, la fourche présente un écartement sensiblement égal à la grande dimension transversale d'une cuvette, une lecture d'absorbance entre la diode électroluminescente et la photodiode étant réalisée selon cette grande dimension de la cuvette.

La diode électroluminescente peut être un composant intégrant plusieurs diodes à différentes longueurs d'onde, et ces diodes sont commutées périodiquement pour permettre le suivi optique de la formation d'un caillot à plusieurs longueurs d'onde.

Avantageusement, le dispositif comporte au moins un puits de rinçage et/ou de décontamination d'aiguilles de prélèvement et de distribution, comprenant une source de liquide décontaminant, le rinçage étant réalisé par débit pulsé puis aspiré.

Ces dispositions permettent des dilutions successives du liquide avec lequel l'aiguille est en contact

Selon un mode de réalisation, le dispositif comporte une station de positionnement d'une cuvette dans laquelle se font les dilutions ou des aliquotes.

Ce dispositif permet :
1) d'effectuer des mesures spectrophotométriques des cuvettes quand le rotor les positionne entre les éléments du dispositif connu de mesure spectrophotométrique,
2) d'évacuer du rotor les cuvettes ayant terminé leur cycle de mesures spectrophotométriques dans un conteneur de déchets,
3) de déposer un volume déterminé d'une solution contenant une concentration fixée de nano particules magnétiques de diamètre compris entre 100 nm et 900 nm, particules fonctionnalisées avec de la streptavidine ou avidine, dans caractérisées et les cuvettes faisant l'objet d'une mesure immunologique,
4) de sortir du rotor après un temps d'incubation programmé, les cuvettes faisant l'objet d'une mesure immunologique et de les insérer dans un module de sédimentation magnétique et de lavage puis de faire réintégrer les cuvettes dans le rotor,
5) de sortir les cuvettes du rotor ayant préalablement été traitées dans le module de sédimentation lavage, de les faire entrer dans un module de révélation et de lecture de la luminescence, puis de les évacuer, après la mesure, dans un conteneur de déchets,
6) de sortir les cuvettes, après un temps d'incubation programmé, cuvettes ayant reçu du plasma et si nécessaire un ou plusieurs réactifs de coagulation, les positionner dans une ou plusieurs cellules de mesure de telle sorte que le dispositif B y puisse déposer le réactif déclenchant propre à la réaction considérée, chaque cellule disposant de moyens optiques permettant de détecter la formation du caillot par absorbance, puis de les évacuer dans un conteneur de déchets.
7) de sortir les cuvettes dans une cellule dédiée ou utilisable pour la mesure de la coagulation afin de distribuer dans cette cuvette du sérum ou du plasma pour effectuer des dilutions ou des aliquotes lorsque l'analyseur est en mesure d'effectuer des perçages de bouchons de tubes échantillons (tubes de prélèvements à vide).

Le dispositif permet également de gérer cet ensemble fonctionnel de façon automatique par un logiciel embarqué, qui gère les séquences du processus souhaité pour chaque cuvette.

Le dispositif permet également un rinçage et une décontamination des aiguilles et des tubulures en contact avec les réactifs et (ou) les échantillons biologiques

La couronne dentée est à la fois un dispositif permettant de déplacer les cuvettes mais aussi qui permet la mesure des tests de biochimie. La couronne possède un nombre de cavités suffisant pour pouvoir gérer à la fois tous les transferts de cuvettes et les incubations des réactions de toutes les disciplines afin d'obtenir les cadences de traitement des échantillons souhaitées.

Les dispositifs d'analyse doivent bénéficier de cadences de traitement adaptées aux besoins de laboratoires dont le nombre de dossiers à traiter par jour peut varier de quelques dizaines à quelques centaines, voire quelques milliers d'échantillons. Il a été mentionné plus haut des systèmes automatiques qui relient entre elles des machines conçues pour des technologies et de disciplines différentes. Ces systèmes sont sans doute la bonne réponse pour les laboratoires qui traitent des quantités de plusieurs centaines ou milliers de tubes par jour, mais ce type de gros équipements qui représente un investissement considérable ne peut se justifier pour les laboratoires qui traitent des quantités de dossiers plus modestes. L'invention a donc pour objet de rendre possible, pour un investissement raisonnable, l'accès à un équipement qui présente les avantages d'un système automatique modulaire de gestion de laboratoire sans en avoir par ailleurs les inconvénients de coût, de complexité, de volume occupé.

Le dispositif d'analyse précité rend possible la réalisation d'une paillasse unifiée pour la biochimie, l'immunologie et la coagulation.

L'invention ne vise pas particulièrement les gros laboratoires qui traitent plus de 200 échantillons par jour. Elle est censée fournir l'équipement idéal pour les laboratoires petits et moyens, pour les laboratoires d'urgence, pour les laboratoires de recherche.

Par exemple, un laboratoire correspondant à cette description pourrait avoir à traiter par jour :
- 300 tests de biochimie,
- 80 tests d'hémostase,
- 40 tests d'immunologie.

Pour que l'équipement réponde à la demande, il faut que de l'ordre de 80% de ces quantités quotidiennes puissent être traités dans un délai de deux heures.

Les cadences d'un tel équipement devraient donc être globalement supérieures à 170 tests/ heure.

Le calcul montre que les cadences doivent alors être pour les différentes disciplines :
- 200 tests/ heure en biochimie,
- 120 tests/ heure en coagulation,
- 60 tests par heure en immunologie.

Si le temps moyen de processus est de cinq minutes pour biochimie et coagulation, et de 30 minutes pour l'immunologie, cela signifie que l'équipement doit gérer en parallèle :
- 17 tests de biochimie,
- 10 tests de coagulation,
- 30 tests d'immunologie.

Soit un total de 57 tests.

Si la cadence doit être doublée pour la biochimie et la coagulation alors il faudra gérer en parallèle :
- 34 tests de biochimie,
- 20 tests de coagulation,
- 30 tests d'immunologie.
   Soit un total de 84 tests en parallèle.
   Dans le dispositif précité, une couronne disposant de 90 encoches permet de faire face à ces deux types de configuration.
   La cadence de traitement sera fixée par la capacité des dispositifs connus de pipetage des échantillons et des réactifs et par les temps de traitement des taches dédiées aux modules satellites.
   Le document EP 1 382 392 décrit une cuvette selon le préambule de la revendication 1.
   La présente invention concerne une cuvette unitaire selon la revendication 1.
   Avantageusement, chaque cuvette, réalisée en matière synthétique transparente compatible avec les différentes réactions qu'elle peut recevoir, possède une partie inférieure de forme parallélépipédique.
   Il doit être noté que l'analyse se fait dans la partie inférieure parallélépipédique de la cuvette.
   Selon un mode de réalisation, la cuvette comporte un fond de cuvette présentant un point bas.
   Cette forme permet d'aspirer les liquides avec un volume mort très réduit et de faciliter le lavage des particules magnétiques.
   Avantageusement, la partie inférieure parallélépipédique de la cuvette est prolongée vers le haut par une partie supérieure tronconique s'évasant vers le haut.
   Cette caractéristique permet d'augmenter le volume de rinçage ou le volume réactionnel.
   Les moyens d'accrochage de la cuvette selon une première direction comportent au moins un crochet ouvert vers le bas ménagé sur l'un des bords de la partie supérieure de la cuvette.
   Avantageusement, la largeur de la cuvette dans la zone comportant le crochet est égale à la largeur d'une cavité de la couronne dentée.
   Ce crochet supérieur formant une languette permet donc d'une part de réaliser le blocage de la cuvette à l'intérieur d'une cavité de la couronne d'entraînement, et d'autre part de permettre l'accrochage de plusieurs cuvettes pour former une ligne de cuvette.
   Les moyens d'accrochage de la cuvette selon une seconde direction comportent deux débords, dont l'un forme un crochet ouvert vers le haut et l'autre forme un crochet ouvert vers le bas, le crochet ouvert vers le haut de l'un des débords étant susceptible de venir en prise avec le crochet ouvert vers le bas du débord d'une cuvette voisine, les crochets étant ménagés sur l'embase de la cuvette, le long de ses deux bords orthogonaux au bord supérieur muni d'un crochet.
   Ces débords permettent d'accrocher les cuvettes les unes aux autres, dans une direction perpendiculaire à la direction d'accrochage obtenue à partir des crochets de la partie supérieure. Il est donc possible d'accrocher des cuvettes les unes aux autres pour former des plaques. En outre, les débords permettent d'avoir des dimensions hors tout des cuvettes qui soient les mêmes dans leurs parties supérieures et dans leurs parties inférieures de telle sorte qu'assemblées entre elles, les cuvettes constituent une plaque plane. Ceci permet d'ordonner les cuvettes afin que le dispositif de distribution des cuvettes soit simple, compact et fiable.
   Suivant une caractéristique avantageuse, visant à une automatisation du processus, le dispositif comprend un magasin de stockage des cuvettes suivant plusieurs étages de plaques, dont chacune est constituée de cuvettes assemblées suivant deux directions perpendiculaires, le magasin comportant des moyens de formation d'une ligne de cuvettes par déplacement vers le bas d'une ligne d'extrémité et décrochement des cuvettes de cette ligne par rapport à celles de la ligne voisine, et des moyens d'isolement d'une cuvette située à une extrémité d'une ligne par déplacement de cette cuvette transversalement à la ligne, avant un nouveau déplacement à l'aide d'un actionneur, dans une cavité de la couronne.
   Les cuvettes sont donc mises sous forme de plaques dans le magasin, et distribuées automatiquement de façon unitaire chacune dans une cavité de la couronne d'entraînement.
   De façon préférentielle, ce dispositif comporte un automate de prélèvement d'échantillons de liquide biologique, contenus dans des tubes disposés dans une zone de stockage, et de réactifs, et de transfert de ceux-ci dans des cuvettes disposées dans des cavités de la couronne d'entraînement.

En outre, l'automate est relié à un ordinateur qui constitue l'interface homme machine, qui traite les demandes des utilisateurs, et envoie les demandes de tests à mener sur les échantillons repérés par un identifiant matérialisé par exemple par une étiquette portant un code à barres et chargé sur l'équipement.

Le principe de l'invention sera bien compris à l'aide de la description qui suit, en référence aux dessins schématiques annexés représentant, à titre d'exemple non limitatif, le dispositif d'analyse pouvant utiliser les cuvettes selon l'invention et la cuvette selon l'invention.
- Figure 1 en est une vue schématique d'ensemble en perspective,
- Figure 2 est une vue schématique en perspective de la partie d'entraînement des cuvettes et des modules disposés autour,
- Figure 3 est une vue en perspective de la couronne d'entraînement des cuvettes et des moyens de guidage de celles-ci,
- Figure 4 est une vue en perspective d'une cuvette,
- Figure 5 est une vue en perspective de plusieurs cuvettes assemblées,
- Figure 6 est une vue en perspective d'une cuvette engagée dans une cavité de la couronne d'entraînement,
- Figure 7 est une vue en perspective d'un actionneur,
- Figure 8 est une vue en perspective d'un empilement de plaques de cuvettes et de la cinématique pour désolidariser les cuvettes les unes des autres,
- Figure 9 est une vue en perspective du magasin de cuvettes,
- Figure 10 est une vue en perspective et à échelle agrandie de la partie du magasin de cuvettes réalisant l'introduction d'une cuvette dans une cavité de la couronne d'entraînement.
- Figure 11 est une vue en coupe d'un puits de rinçage comprenant une aiguille dans une première position
- Figure 12 est une vue en coupe d'un puits de rinçage comprenant une aiguille dans une seconde position
- Figure 13 est une vue en perspective d'un module de coagulation dans une première position
- Figure 14 est une vue en perspective d'un module de coagulation dans une seconde position
- Figure 15 est une vue en coupe latérale d'une cuvette
- Figure 16 est une vue en coupe transversale d'une cuvette

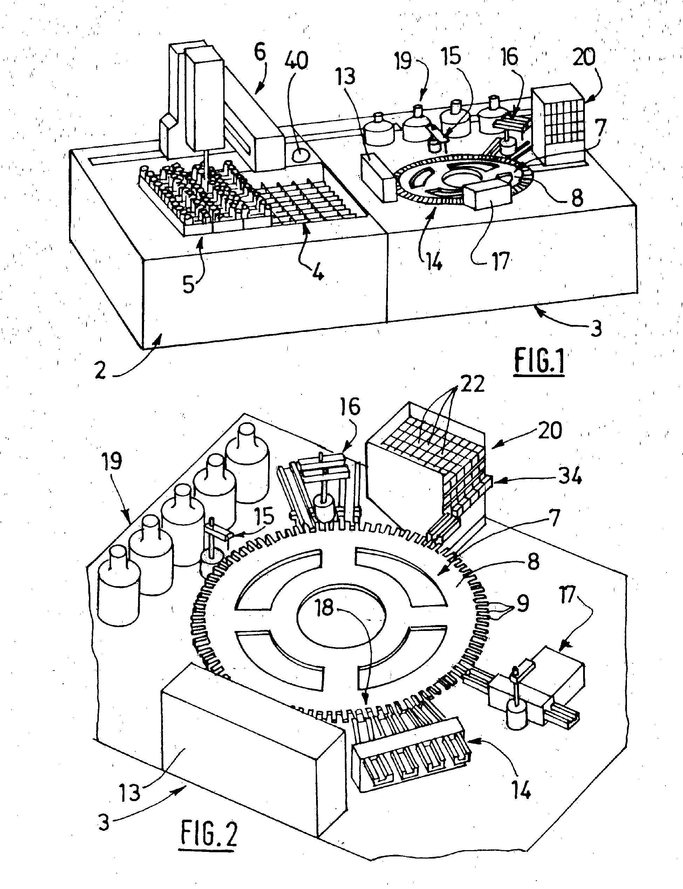

Le dispositif pouvant utiliser des cuvettes selon l'invention est schématisé sur la figure 1. Aux éléments figurant sur la figure 1, il convient d'ajouter un ordinateur, par exemple de type PC, avec clavier, écran et périphérique classique.

Le dispositif pouvant utiliser des cuvettes selon l'invention comprend une première partie de stockage et de prélèvement des échantillons de liquide biologique et une seconde partie 3 de mesure et d'analyse. La première partie 2 comprend une zone 4 de stockage des échantillons de liquide biologique à analyser, qui peut être un tiroir à accès commandé ou sécurisé avec détection des positions occupées.

La partie 2 de la machine comprend également une zone 5 réfrigérée des réactifs liquides en flacon ou en conteneur, qui peut être un tiroir à accès commandé ou sécurisé avec détection des positions occupées. Un lecteur d'étiquette portant des codes à barres peut également servir à lire les données des lots de réactifs.

Un dispositif 6 connu, de prélèvement et de pipetage des échantillons et des réactifs, permet de déposer ceux-ci dans des cuvettes disposées dans la partie 3 du dispositif.

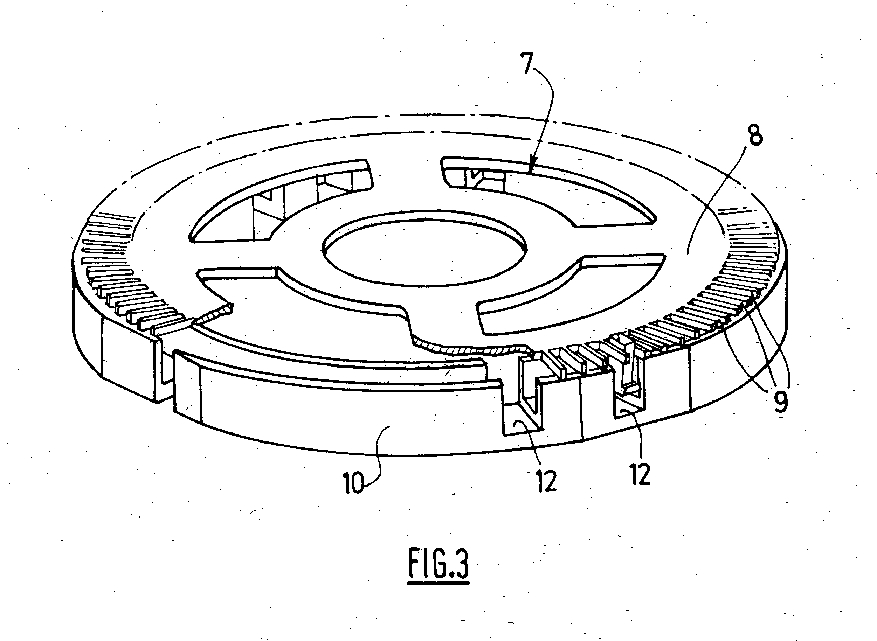

La partie 3 du dispositif comprend essentiellement un rotor 7 monté pivotant autour d'un axe vertical, et entraîné par un moteur non représenté. Sur ce rotor 7, est calée une couronne d'entraînement 8, qui est une couronne dentée, cette couronne délimitant des cavités 9 débouchant radialement vers l'extérieur. Cette couronne se déplace au-dessus d'un élément 10 et qui possède une section en U, ouverte vers le haut. La pièce 10, de forme torique, est régulée en température, par exemple à 37°C, grâce à un moyen connu de chauffage comme une résistance électrique laminaire, un capteur de température et un asservissement. La pièce 10 délimite donc un volume régulé en température entre la couronne 8 et le U dans lequel les cuvettes se déplacent sous l'action de la couronne. Comme cela ressort notamment de la figure 3, la pièce 10 comporte un certain nombre d'ouvertures 12 ménagées au moins dans sa paroi extérieure, les ouvertures 12 étant disposées en regard des postes nécessitant une introduction et/ou un retrait des cuvettes.

Comme montré aux figures 1 et 2 autour de la couronne d'entraînement 8 sont disposés un certain nombre de postes, orientés radialement.

Il s'agit notamment :
- d'un poste 13 pour la mesure photométrique,
- d'un poste 14 pour l'évacuation des cuvettes usagées vers un conteneur de déchets,
- d'un poste 15 de distribution de nano particules magnétiques greffées avidines ou streptavidines, pour des réactions de captures immunologiques,
- d'un poste 16 pour la sédimentation magnétique et le lavage,
- d'un poste 17 pour la révélation et la lecture de la luminescence,
- d'un poste 18 comprenant quatre stations de mesures pour les tests de coagulation, qui peuvent également servir de station d'aliquote ou de dilution.

Des stations 19 sont prévues pour les réactifs ancillaires, pour les particules magnétiques, pour la révélation de la luminescence, pour la décontamination et la désorption des protéines dans les tubulures du système de prélèvement. Ce dispositif comporte également un magasin 20 pour le stockage et la distribution des cuvettes dans les cavités de la couronne d'entraînement.

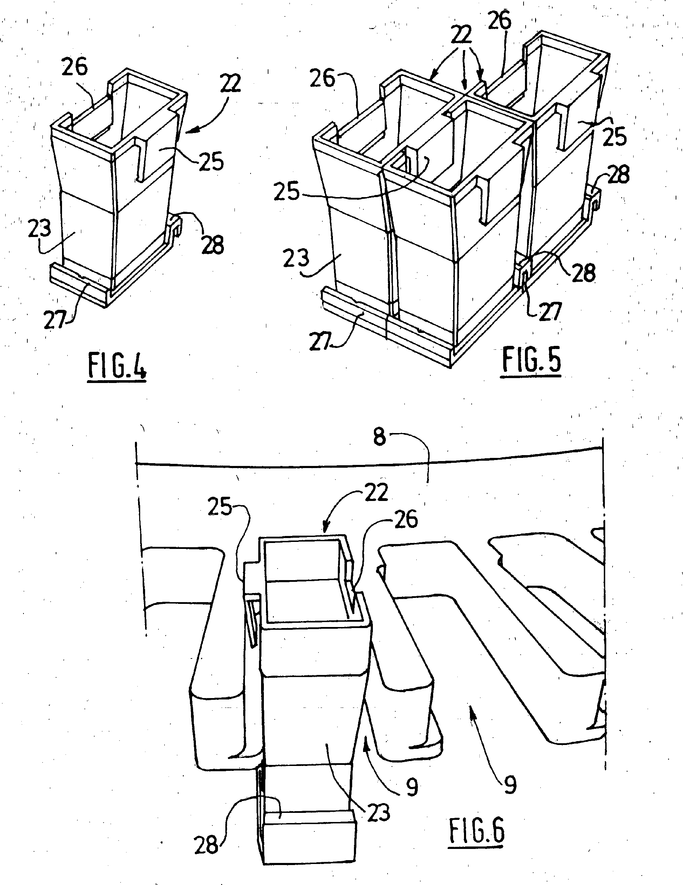

La figure 4 représente une cuvette 22 vue en perspective.

Cette cuvette est réalisée par moulage dans une matière synthétique transparente, compatible avec les différentes réactions chimiques, immunologiques, enzymatiques mises en jeu dans les analyses. Un matériau adapté est le polypropylène mais tout autre matériau plastique, dont les caractéristiques de transparence pour la mesure de densité optique sont suffisantes et qui ne présente pas d'affinité trop importante avec les protéines, peut convenir.

La cuvette présente une partie inférieure 23 de forme parallélépipédique, offrant un chemin optique de l'ordre de 8 millimètres dans la grande dimension et un chemin optique de l'ordre de 4 millimètres dans la petite dimension. Ces dimensions permettent d'obtenir un mélange réactionnel minimum de 200 µl qui limite les consommations de réactifs, tout en conservant des chemins optiques suffisants pour les mesures spectrophotométriques et turbidimétriques (coagulation). La partie supérieure 24 de la cuvette est tronconique et évasée vers le haut de manière à permettre des volumes réactionnels importants, en bénéficiant d'une ouverture large, et à faciliter le rinçage des nano particules pour les tests d'immunologie. Ainsi, une cuvette 21 de 22 mm de haut peut contenir jusqu'à 650 µl.

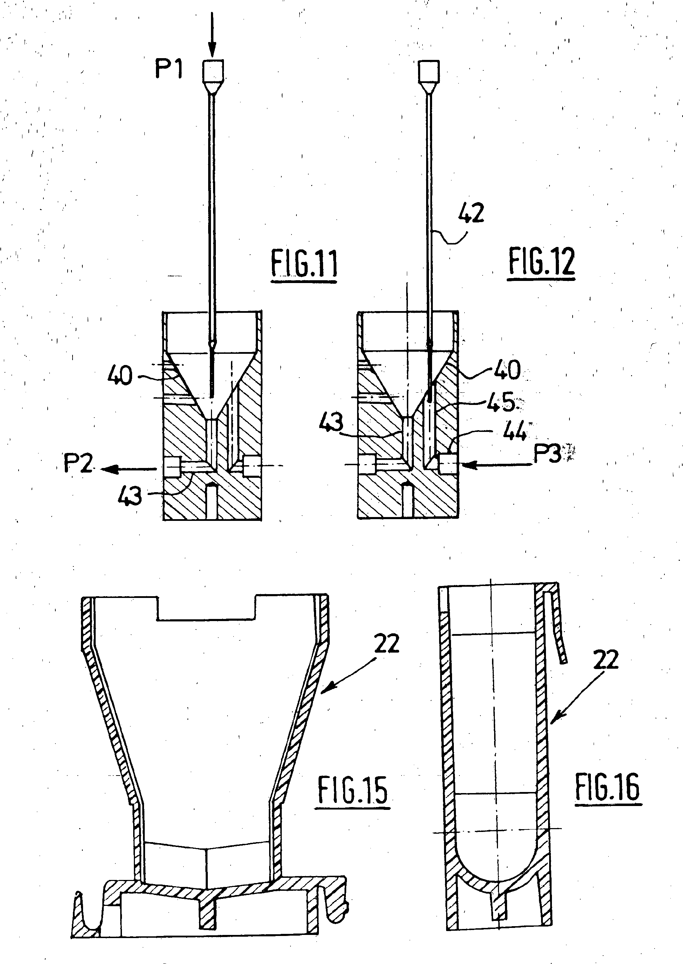

La cuvette comporte un fond 21, qui présente un point bas, ainsi que le montre les figures 15 et 16, de telle sorte que l'aspiration permette d'évacuer la quasi-totalité du liquide par aspiration avec un volume restant dans la cuvette très réduit. Cette disposition est avantageuse pour le lavage des particules magnétiques.

Comme montré au dessin, la cuvette 22 présente, dans sa partie supérieure 24, un crochet 25 tourné vers le bas, faisant saillie de l'un de ses bords longitudinaux. Sur son autre bord, la cuvette comporte un décrochement 26 complémentaire. Le crochet 25 d'une cuvette vient donc coiffer le décrochement 26 d'une cuvette immédiatement voisine, pour réaliser l'accrochage de deux cuvettes, comme montré à la figure 5. Le crochet 25 joue également une autre fonction, comme montré à la figure 6. En effet, la largeur de la cuvette, incluant le crochet 25 est égale à la largeur d'une cavité 9 de la couronne d'entraînement. De ce fait, quand la cuvette est engagée dans la couronne d'entraînement, le crochet 25 est appliqué contre la paroi de la cavité et, par effet ressort, l'immobilise, de telle sorte qu'elle ne se déplace pas lors des rotations du rotor et de la couronne et permet ainsi des mesures optiques stables.

L'embase de la cuvette 22 comporte, dans le sens de la largeur, deux débords 27, 28, l'un 27 des débords formant un crochet ouvert vers le haut et l'autre 28 formant un crochet ouvert vers le bas. Les crochets 27 et 28 de deux cuvettes voisines permettent leur accrochage dans une direction orthogonale à la direction d'accrochage permise par les crochets 25.

Il est donc possible de réaliser de façon manuelle ou de façon automatique des plaques de cuvettes, en réalisant un assemblage dans deux dimensions perpendiculaires, comme cela est montré à la figure 5.

Cela permet de réaliser un stockage de cuvette sous un volume très restreint car il n'y a pas d'espace perdu entre les cuvettes, ainsi 160 cuvettes fixées les unes aux autres peuvent formées une plaque d'environ 118 mm/ 128 mm, ce qui est plus compacte qu'une micro plaque classique de puits de mesure dont le volume réactionnel est beaucoup plus restreint et qui n'autorise qu'une lecture photométrique verticale de performances limitées.

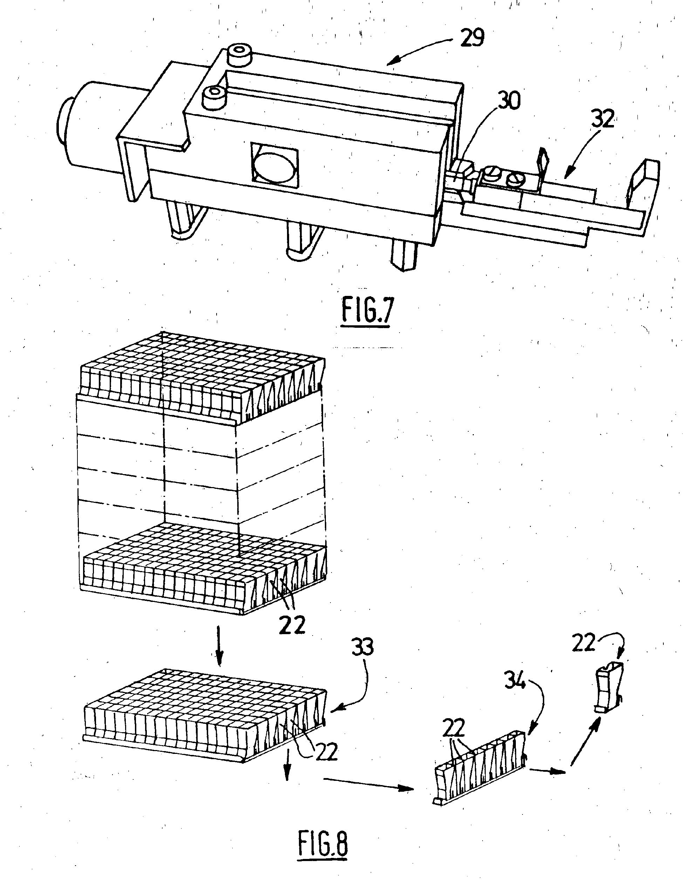

La figure 7 représente un actionneur à double effet 29, comprenant un moteur électrique pas à pas, non représenté au dessin, disposant d'un axe à vis formant vérin, dont l'extrémité 30 est représentée au dessin, cet axe portant un élément 32 en forme de U, destiné à venir se loger dans la pièce torique, et plus précisément au niveau d'une ouverture de cette pièce, sur le passage des cuvettes, pour pouvoir extraire ou repositionner une cuvette dans la pièce torique 10.

La figure 8 représente une pile de plaques de cuvettes 22. Les plaques sont superposées. Il est possible de libérer la plaque inférieure 33 par déplacement de celle-ci vis-à-vis des autres plaques de la pile. Ensuite, il est possible de dégager une ligne 32, par déplacement verticale des cuvettes de cette ligne vis-à-vis des autres cuvettes de la même plaque. Ensuite, une cuvette 22 peut-être séparée des autres cuvettes de la même ligne 34, par un déplacement transversal.

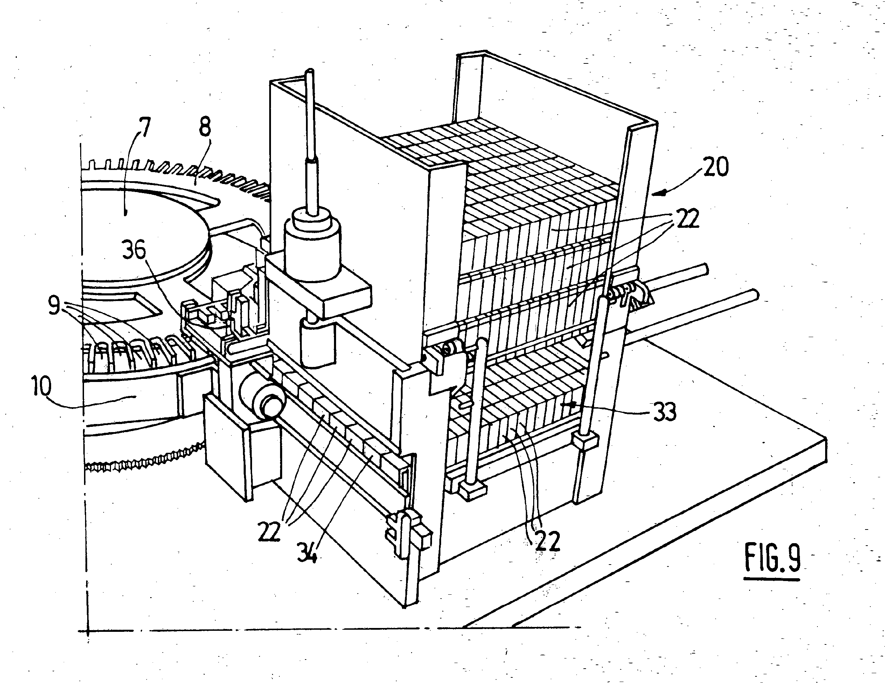

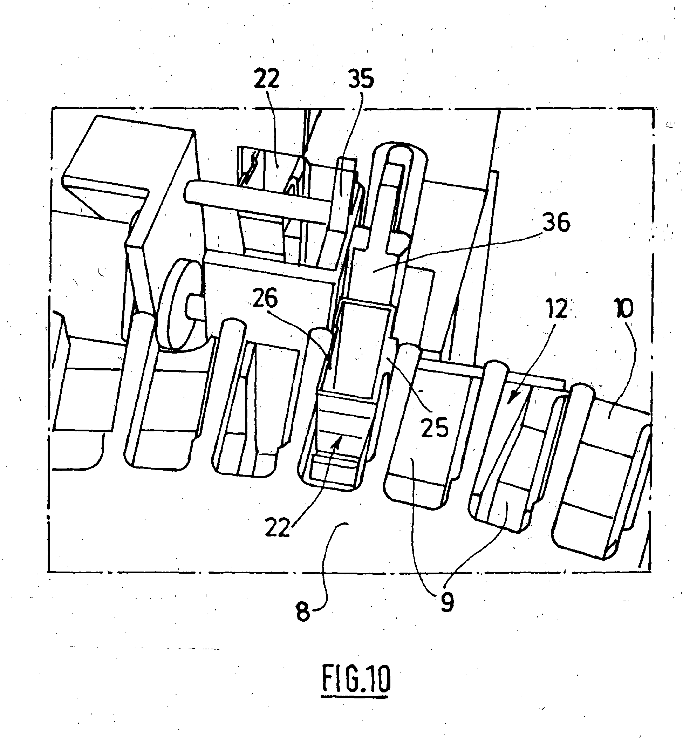

Les figures 9 et 10 illustrent plus en détail le magasin 20.

Comme montré sur la figure 9, plusieurs plaques de cuvettes sont stockées dans le magasin. Ce magasin permet de libérer la plaque inférieure qui tombe sur un support. Cette plaque est poussée vers la gauche, jusqu'à ce que la ligne 34 puisse être décalée vers le bas et se décrocher du reste de la plaque. Ensuite, la ligne 34 est poussée en direction de la couronne d'entraînement, après quoi la première cuvette est dégagée transversalement des autres par un poussoir 35, qui l'emmène au droit d'un second poussoir 36, transversal au premier, pouvant pousser la cuvette 22 dans une cavité 9 de la couronne 8 comme montré à la figure 10.

Le fonctionnement de ce dispositif est le suivant.

La couronne 8 tourne autour de son axe vertical. Elle possède un nombre de cavités 9 suffisant pour être en mesure de traiter en parallèles les tests des différentes technologies aux cadences souhaitées. Le nombre de 90 cavités est suffisant pour traiter jusqu'à 400 tests/ heure en biochimie, 300 tests/ heure en coagulation et 150 tests/ heure en immunologie. Le diamètre de la couronne est approximativement de 250 mm, ce qui permet de conserver un caractère de compacité à l'analyseur et permettre de réaliser une machine dite de paillasse plus simple à installer dans un laboratoire.

Le magasin 20 introduit les cuvettes comme décrit plus haut.

Le module 13 est le dispositif connu de spectrophotométrie. Il permet de réaliser des mesures d'absorbance ou de densité optique à différentes longueurs d'onde. Il est composé :
- d'une source de lumière qui peut être une lampe halogène, d'un guide de lumière (fibre optique),
- d'un système de colimatage du faisceau qui traverse la cuvette à mesurer radialement au rotor dans le sens de la grande longueur de la cuvette. Ce système se trouve dans l'intérieur du rotor et plus précisément du tore servant de rail aux cuvettes,
- d'un photomètre disposant de moyens permettant de faire des mesures d'intensité de lumière transmise pour des longueurs d'onde déterminées, soit au moyen de filtres interférentiels, soit en utilisant un prisme et un réseau de photodiodes. Le photomètre est à l'extérieur du rotor.

Le module 15 est un dispositif composé d'une aiguille d'injection qui se déplace verticalement sous l'effet d'un actionneur. Il permet d'introduire dans la cuvette positionnée sous l'aiguille, un volume déterminé d'une solution de réactif ancillaire contenant des nano particules magnétiques caractérisées streptavidine ou avidine. Pour ce module, compte tenu du faible temps nécessité par la descente de l'aiguille et par l'injection des particules, il n'y a pas lieu de sortir les cuvettes du rotor. A ce sujet, il a été préféré d'utiliser des nano particules génériques greffées avec de l'avidine ou de la streptavidine et de produire des réactifs biotinilés Cette solution met donc en oeuvre un seul réservoir ou flacon d'une solution contenant ces particules, réservoir ou flacon devant être agité périodiquement pour maintenir les particules en suspension. Ce flacon est positionné dans la zone des réactifs ancillaires ANC. Cette solution évite de devoir agiter tous les réactifs d'immunologie qui sans cette solution de particules génériques, devraient contenir des nano particules greffées avec un anticorps spécifique.

Le module 16 est un dispositif qui nécessite la sortie de la couronne, de la cuvette à traiter car le processus est assez long et peut prendre plusieurs dizaines de secondes. Un petit actionneur linéaire placé à l'intérieur de la couronne et fixé sur le tore fixe, extrait donc la cuvette à traiter de la couronne dans un mouvement radial centrifuge et la positionne devant des aimants qui attirent les particules sur les parois de la cuvette. Le contenu est alors aspiré et une solution de lavage (réactifs ancillaires ANC) est introduite. Les particules sont remises en suspension en déplaçant la cuvette hors zone magnétique, puis en la réintroduisant en zone magnétique pour un éventuel nouveau lavage fonction du paramétrage du test considéré. Le module 16 peut comprendre avantageusement deux stations pour pouvoir traiter deux cuvettes en parallèle. Une fois la cuvette traitée, elle est réintroduite sur le rotor à encoches grâce à un mouvement centripète de l'actionneur.

Le module 17 est le module de révélation de la luminescence. La cuvette ayant été lavée par le module 16 est transportée par la couronne 8 sans contrainte temporelle précise puisque les réactions sont arrêtées. Un actionneur semblable à celui utilisé par le module 16 extrait la cuvette de la couronne et en combinaison avec un autre actionneur permet d'introduire, par un mouvement vertical, la cuvette dans la chambre étanche à la lumière. Cette chambre dispose de deux aiguilles de distribution de réactifs de révélation de la luminescence. Elles sont reliées par des pompes aux flacons spécifiques de réactifs ancillaires ANC :
- Eau oxygénée conservée en milieu acide,
- Solution de soude de neutralisation et de déclenchement de la réaction de luminescence.

Le module 17 comporte un dispositif photomultiplicateur connu qui permet de quantifier la luminescence produite après introduction de la solution de soude. Cette mesure est fonction de la concentration de l'analyte à mesurer.

Une fois la mesure terminée, la cuvette est évacuée dans le conteneur de déchets par l'action des actionneurs linéaires dont la station dispose.

Le module 18 est confondu dans le cas de l'exemple avec le module 14 d'évacuation des cuvettes. Il est composé de plusieurs stations qui peuvent recevoir les cuvettes pour les mesures de temps de coagulation. Chaque station dispose d'un actionneur linéaire situé à l'intérieur de la couronne, fixé sur le tore thermostaté fixe qui permet d'extraire les cuvettes de la couronne et de les positionner dans une cellule de mesure pourvue d'une diode électroluminescente de longueur d'onde appropriée (par exemple de 400 à 560 nm) ou d'un composant multi longueur d'onde qui émet un faisceau traversant la cuvette dans sa petite dimension et d'une photodiode qui mesure l'évolution de la lumière transmise. Quand le dispositif de traitement du signal de la photodiode observe une variation d'absorbance révélant la coagulation, la cellule de mesure peut recevoir une nouvelle cuvette. L'ancienne sera alors automatiquement poussée vers le conteneur de déchets. C'est en ce sens que la station 18 est en même temps la station 14. En effet, le calcul montre qu'il n'est pas nécessaire de créer une station d'évacuation spécifique des cuvettes utilisées pour les tests de biochimie. Et qu'elles peuvent transiter par les stations de coagulation qui sont au nombre de quatre dans l'exemple considéré.

Le fonctionnement de l'analyseur est décrit à titre d'exemple avec un dossier patient X qui comprend deux tubes de prélèvement :
o un tube de sérum
o un tube de plasma.

Ce patient X a reçu les prescriptions suivantes :
o chimie clinque (biochimie) : glycémie, cholestérol, triglycérides, CRP en micro latex,
o coagulation : TP, APTT
o immunologie : troponine, myoglobine, TSH.

Soit neuf analyses qui vont être lancées séquentiellement mais en parallèle. Sans entrer dans les détails des méthodologies de chaque analyse, considérons les processus propres à chaque type d'analyse : biochimie, coagulation, immunologie.

Les demandes de tests ont été faites sur l'ordinateur PC grâce à l'interface homme machine après ou avant les chargement des échantillons. Cela se fait préférentiellement en utilisant la connexion informatique dont est pourvue le système qui se charge de cette tache automatiquement.

Les demandes de tests sont transmises via une liaison Ethernet, dans l'exemple, au processeur qui gère les automatismes et le traitement primaire des résultats. Le processeur sait donc que pour telle identité de tube échantillon, il a donc à réaliser tel processus utilisant séquentiellement des quantités de réactifs définis par leurs identités. Le processeur utilise pour remplir ses missions des moyens électroniques analogiques et numériques connus.

L'opérateur a préalablement chargé les réactifs en les identifiant par exemple à l'aide d'un lecteur de code à barres externe ou interne à la machine. Au fur et à mesure de l'arrivée des échantillons dans le laboratoire, les tubes échantillons sont chargés dans la machine en les identifiant de la même manière que les réactifs. C'est donc les cas pour les deux tubes de plasma et de sérum provenant du même patient.

Le chargeur 20 a déjà alimenté la couronne en cuvettes vides de telle sorte qu'elles soient portées à la température du tore (37 °C).

Pour un test de biochimie : la cuvette reçoit du système de prélèvement et pipetage, échantillon (sérum) et réactif(s), et les mesures photométriques commencent et se terminent, la cuvette restant sur la couronne. Quand les mesures sont terminées, la cuvette est prête à être évacuée, via l'une des cellules de coagulation, dans le conteneur de déchets.

Pour un test de coagulation : la cuvette reçoit du système de prélèvement et pipetage, échantillon (plasma) et si nécessaire réactif(s). Après une incubation de quelques minutes, la couronne 8 positionne la cuvette 22 considérée en face d'une station de coagulation 18. La cuvette est alors introduite dans la cellule de mesure. Le système de prélèvement et pipetage vient alors injecter dans la cuvette, le réactif déclenchant. La mesure du temps commence. Quand l'algorithme de traitement a détecté la coagulation, alors la mesure est terminée et une cuvette nouvelle peut prendre la place de la cuvette usagée. Une cuvette usagée de biochimie peut également prendre la place ou une cuvette dans laquelle va être réalisée une dilution du sérum ou du plasma ou un aliquote d'un tube si l'analyseur est équipé d'un perçage de bouchon.

En effet, la précision d'un prélèvement par l'aiguille au travers du bouchon est insuffisante pour les petits volumes (de l'ordre de 3 ou 5 µl). Il convient donc de prélever un volume suffisant de par exemple 200 µl, de le distribuer dans une cuvette vide puis de procéder aux prélèvements de petits volumes de sérum ou de plasma à partir de cette cuvette.

Selon une variante, une station peut évidemment être dédiée à cette fonction d'aliquote.

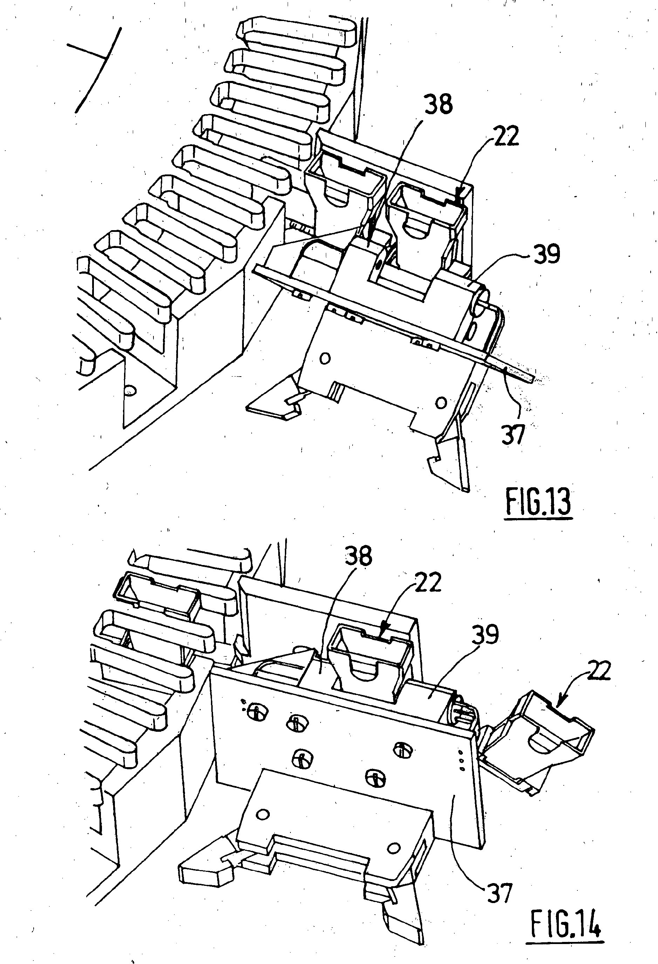

Le poste de coagulation est détaillé en figure 13 et 14, selon une variante différente de celle représentée figure 1.

Afin de bénéficier d'un signal de plus grande amplitude possible, la lecture de l'absorbance se fait dans la grande dimension de la cuvette (8mm). Il faut donc prendre la cuvette entre les deux parties d'une fourche optique escamotable pour permettre le mouvement de la cuvette du rotor vers la station puis de la station vers le conteneur de déchets.

A cet effet, comme le représente les figures 13 et 14, le poste de coagulation comporte une plaque 37 qui comprend les éléments optiques suivant:
- une diode électroluminescente 38 pouvant émettre sur plusieurs longueurs d'onde afin d'observer la formation du caillot en multi chromatisme, détecter les plasmas anormaux, commutée séquentiellement sur chacune des longueurs d'onde à des temps de l'ordre de 100 msec et non alimentée pour mesurer la référence de lumière ambiante.
- une photodiode 39 recueillant le signal lumineux transmis au travers de la cuvette.

La plaque 37 tourne sur un pivot et est munie d'une came de telle sorte que lorsque la cuvette qui vient du rotor est poussée par l'actionneur, automatiquement, la plaque bascule et la nouvelle cuvette vient se placer dans la cellule de mesure en poussant la précédente dans la poubelle, ainsi que représenté sur la figure 14.

Pour un test d'immunologie, la cuvette reçoit échantillon et réactif(s), la couronne positionne la cuvette sous le module 15 de distribution des nano particules magnétiques, puis la cuvette incube le temps nécessaire qui peut aller de quelques minutes à 1 heure. A l'issue de l'incubation, la cuvette est positionnée en face du module 16 puis introduite pour y subir la phase de lavage. La cuvette est rechargée sur la couronne puis positionnée en face du module 17 pour, après introduction, être mesurée en luminescence. Quand la mesure est terminée, la cuvette est évacuée dans le conteneur de déchets.

On voit donc que tous ces processus peuvent se dérouler en parallèle puisque chaque opération spécifique se passe en dehors de la couronne de manière asynchrone par rapport aux autres opérations. Le processeur de la machine gère de manière optimale les déplacements de cuvettes avec la couronne qui sert également d'élément actif pour la mesure photométrique.

Les possibilités de contamination inter échantillon ou inter réactifs sont importantes induites par la multiplicité des tests qui peuvent être réalisés du fait de la pluridisciplinarité. Il faut donc particulièrement bien traiter la décontamination de ou des aiguilles de prélèvements. En conséquence, un système de rinçage et de décontamination distinct est prévu par aiguille. Les figures 11 et 12 détaillent le puits de rinçage 40 de la figure 1.

Une aiguille de prélèvement 42 est reliée à une pompe P1 permettant de faire passer des volumes déterminés de liquide du système dans l'aiguille et les tubulures. Cette pompe peut être commandée de telle sorte que le débit soit pulsé.

L'aiguille 42 est positionné dans le puits de rinçage 40 de forme conique, ce puits étant relié par un conduit 43 débouchant dans le fond du puits à une pompe P2 qui aspire le liquide rejeté par l'aiguille. Entre le puits 40 et la pompe P2 se trouve une électrovanne qui peut être fermée quand la pompe P1 fait passer du liquide du système par l'aiguille 42, puis ouverte quand la pompe P1 n'est plus commandée. Cela permet de fermer le puits 40 quand la pompe P1 débite et ainsi faire remonter le liquide pour rincer les parois externes de l'aiguille.

Le puits 40 comprend en outre une arrivée 44 de liquide de décontamination qui permet de neutraliser les protéines qui peuvent s'adsorber sur les parois de l'aiguille et des tubulures. Ce liquide de décontamination fait partie des réactifs ancillaires et est délivré par une pompe P3. Lorsque le processus propre à chaque test comprend une décontamination, l'aiguille 42 est positionnée dans un conduit vertical 45 ménagé dans la partie conique du puit, communiquant avec l'arrivée 44 de liquide de décontamination, et plonge dans le liquide décontaminant, aspire la quantité nécessaire pour décontaminer toute la tubulure à décontaminer, est déplacée verticalement puis au centre du puits où le liquide de décontamination est évacué puis la procédure de rinçage utilisant le liquide du système est activé.

Ce système permet d'une part de rincer par dilutions successives, d'autre part de procéder à une décontamination puissante en déplaçant très peu le bras qui porte l'aiguille et aussi de décontaminer automatiquement le puits de rinçage.

Quelles que soient les mesures, elles sont attachées à une identité de patient et sont transmises à l'ordinateur PC qui gère l'interface homme-machine. Elles y sont traitées en fonction des calibrations, des contrôles, etc.

Bien entendu, le dispositif ne se limite pas au mode d'application décrit. L'analyseur peut disposer ainsi de deux systèmes de prélèvement et de pipetage pour accélérer le traitement des échantillons et des réactifs et augmenter les cadences. Le système dévolu au prélèvement d'échantillons peut par exemple prélever sur un passeur linéaire automatisé de tubes ou sur une chaîne automatique de convoyage.

On peut également imaginer que le système soit doté d'un module radial permettant la mesure sur la base d'une autre technologie par exemple un module de fluorescence.

## Revendications

1. Cuvette unitaire pour un dispositif d'analyse pour diagnostic in vitro comportant des moyens d'accrochage (25) dans une première direction à au moins une autre cuvette unitaire et des moyens d'accrochage (27, 28) dans une seconde direction, sensiblement perpendiculaire à la première, à au moins une autre cuvette unitaire, **caractérisée en ce que** les moyens d'accrochage de la cuvette selon une première direction comportent au moins un crochet (25) ouvert vers le bas ménagé sur l'un des bords d'une partie supérieure (24) de la cuvette, et **en ce que** les moyens d'accrochage de la cuvette selon une seconde direction comportent deux débords, dont l'un forme un crochet (27) ouvert vers le haut et l'autre forme un crochet (28) ouvert vers le bas, le crochet (27) ouvert vers le haut de l'un des débords étant susceptible de venir en prise avec le crochet (28) ouvert vers le bas du débord d'une cuvette voisine, les crochets d'accrochage selon la seconde direction (27, 28) étant ménagés sur l'embase de la cuvette, le long de ses deux bords orthogonaux au bord de la partie supérieure muni du crochet (25).

2. Cuvette unitaire selon la revendication 1, **caractérisée en ce que** chaque cuvette (22), réalisée en matière synthétique transparente compatible avec les différentes réactions qu'elle peut recevoir, possède une partie inférieure (23) de forme parallélépipédique.

3. Cuvette unitaire selon l'une des revendications 1 ou 2, **caractérisée en ce qu'**elle comporte un fond de cuvette (21) présentant un point bas.

4. Cuvette unitaire selon l'une des revendications 1 à 3, **caractérisée en ce que** la partie inférieure (23) parallélépipédique de la cuvette est prolongée vers le haut par une partie supérieure (24) tronconique s'évasant vers le haut.

5. Cuvette unitaire selon l'une des revendications 1 à 4, **caractérisée en ce que** le crochet d'accrochage (25) dans la première direction est adapté pour immobiliser, par effet ressort, la cuvette contre la paroi d'une cavité (9) d'une couronne d'entraînement lorsque la largeur de la cuvette dans la zone comportant le ledit crochet (25) est égale à la largeur de ladite cavité (9).

## Patentansprüche

1. Einheitsküvette für eine Analysevorrichtung zur In-Vitro-Diagnose, umfassend Mittel zur Verankerung (25) in einer ersten Richtung an mindestens eine andere Einheitsküvette, und Mittel zur Verankerung (27, 28) in einer zweiten Richtung an, im Wesentlichen senkrecht zur ersten Richtung, mindestens eine andere Einheitsküvette, **dadurch gekennzeichnet, dass** die Mittel zur Verankerung der Küvette in einer ersten Richtung mindestens einen Haken (25) umfassen, der nach unten offen ist, der an einem der Ränder eines oberen Teils (24) der Küvette angeordnet ist, und dadurch, dass die Mittel zur Verankerung der Küvette in einer zweiten Richtung zwei Überstände umfassen, von denen der eine einen Haken (27) bildet, der nach oben offen ist, und der andere einen Haken (28) bildet, der nach unten offen ist, wobei der Haken (27), der nach oben von einem der Überstände offen ist, den Haken (28), der nach unten vom Überstand offen ist, einer benachbarten Küvette eingreifen kann, wobei die Haken zur Verankerung in der zweiten Richtung (27, 28) auf dem Sockel der Küvette, entlang seiner zwei orthogonalen Ränder am Rand des oberen Teils, der mit dem Haken (25) ausgestattet ist, angeordnet sind.

2. Einheitsküvette nach Anspruch 1, **dadurch gekennzeichnet, dass** jede Küvette (22), die aus transparentem synthetischen Material hergestellt ist, das mit den verschiedenen Reaktionen kompatibel ist, die sie eingehen kann, einen unteren Teil (23) in parallelepipeder Form umfasst.

3. Einheitsküvette nach einem der Ansprüche 1 oder 2, **dadurch gekennzeichnet, dass** sie einen Küvettenboden (21) umfasst, der einen unteren Punkt aufweist.

4. Einheitsküvette nach einem der Ansprüche 1 bis 3, **dadurch gekennzeichnet, dass** der untere parallelepipede Teil (23) der Küvette nach oben durch einen kegelstumpfartigen oberen Teil (24) verlängert ist, der sich nach oben aufweitet.

5. Einheitsküvette nach einem der Ansprüche 1 bis 4, **dadurch gekennzeichnet, dass** der Haken zur Verankerung (25) in der ersten Richtung ausgelegt ist, um, durch eine Federwirkung, die Küvette gegen die Wand eines Hohlraums (9) eines Antriebskranzes zu blockieren, wenn die Breite der Küvette im Bereich, der den Haken (25) umfasst, gleich der Länge Breite des Hohlraums (9) ist.

## Claims

1. A unit cuvette for an analysis device for in vitro diagnosis comprising means (25) for attaching in a first direction to at least another unit cuvette and means (27, 28) for attaching in a second direction, substantially perpendicularly to the first, to at least another unit cuvette, **characterized in that** the means for attaching the cuvette along a first direction comprise at least one downwardly open hook (25) arranged on one of the edges of an upper part (24) of the cuvette, and **in that** the means for attaching the cuvette along a second direction comprise two overhangs, of which one forms a upwardly open hook (27) and the other forms a downwardly open hook (28), the upwardly open hook (27) of one of the overhangs being liable to engage with the downwardly open hook (28) of the overhang of a neighboring cuvette, the hooks (27, 28) for attaching along the second direction being arranged on the base of the cuvette, along its two edges orthogonal to the edge of the upper part provided with the hook (25).

2. The unit cuvette according to claim 1, **characterized in that** each cuvette (22), made in synthetic transparent material compatible with the different reactions it may receive, has a lower part (23) of parallelepiped shape.

3. The unit cuvette according to any of claims 1 or 2, **characterized in that** it comprises a cuvette bottom (21) exhibiting a low point.

4. The unit cuvette according to any of claims 1 to 3, **characterized in that** the lower parallelepiped part (23) of the cuvette is extended upwards by an upper tapered part (24) flared towards the top.

5. The unit cuvette according to any of claims 1 to 4, **characterized in that** the hook (25) for attaching in the first direction is suitable for immobilizing, by spring effect, the cuvette against the wall of a cavity (9) of a drive ring when the width of the cuvette in the area comprising said hook (25) is equal to the width of said cavity (9).
